Europäisches Patentamt

European Patent Office

Office européen des brevets

(19)

(11) Veröffentlichungsnummer: **0 237 852**
**B1**

(12) **EUROPÄISCHE PATENTSCHRIFT**

(45) Veröffentlichungstag der Patentschrift:
22.11.90

(21) Anmeldenummer: **87102844.5**

(22) Anmeldetag: **27.02.87**

(51) Int. Cl.⁵: **F27B 1/02,** C21C 5/56,
C21B 13/00

(54) **Verfahren und Vorrichtung zum kontinuierlichen Einschmelzen von Schrott.**

(30) Priorität: **15.03.86 DE 3608802**

(43) Veröffentlichungstag der Anmeldung:
**23.09.87 Patentblatt 87/39**

(45) Bekanntmachung des Hinweises auf die Patenterteilung:
**22.11.90 Patentblatt 90/47**

(84) Benannte Vertragsstaaten:
**BE FR GB IT LU NL**

(56) Entgegenhaltungen:
**FR-A- 579 293**
**FR-A- 2 257 687**
**FR-A- 2 261 343**
**FR-A- 2 406 792**
**US-A- 4 347 079**

(73) Patentinhaber: **MANNESMANN Aktiengesellschaft,
Mannesmannufer 2, D-4000 Düsseldorf 1(DE)**

(72) Erfinder: **Hoster, Thomas, Dr.,
Walter-Hohmannstrasse 17, D-4300 Essen 1(DE)**
Erfinder: **Neuschütz, Dieter, Dr., Neckarstrasse 49,
D-4300 Essen 18(DE)**
Erfinder: **Röpke, Wolf-Dieter Dr., Höhenweg 16,
D-5901 Wilnsdorf-Obersdorf(DE)**

(74) Vertreter: **Meissner, Peter E., Dipl.-Ing. et al,
Patentanwaltsbüro Meissner & Meissner,
Herbertstrasse 22, D-1000 Berlin 33(DE)**

**Beschreibung**

Die Erfindung bezieht sich auf ein Verfahren zum kontinuierlichen Einschmelzen von Schrott und/oder Eisenschwamm in einem Schmelzofen mit einem an einen vertikalen Schacht unten anschließenden Herd, der asymmetrisch zur vertikalen Achse des Schachtes geformt ist, wobei im von der Achse am weitesten entfernten Teil des Herdes sowie näher zu der Achse über dem Bad jeweils mindestens eine Düse und am Schacht mindestens eine weitere Düse angeordnet ist, bei dem durch die Düsen des Herdes zugeführter Brennstoff teilweise mit Sauerstoff verbrannt und das bei der Teilverbrennung entstehende Gas mit durch die Düse(n) des Schachtes zugeführtem Sauerstoff zur Schrottvorwärmung nachverbrannt wird; sowie auf eine Vorrichtung zur Durchführung des Verfahrens.

Verfahren zum Einschmelzen von Schrott, bei denen Kohlenstoffträger zur Erzeugung der Schmelzwärme verwendet werden, sind bereits bekannt. Beispielsweise ist vorgeschlagen worden, Schrott in Kupolöfen einzuschmelzen, wie sie zur Herstellung von Gußeisen als Gießereischachtöfen eingesetzt werden. In solchen Öfen wird der metallische Einsatz unter Zugabe von schlackenbildenden Zuschlagstoffen (Kalkstein) und metallurgischem Koks als Energieträger geschmolzen. Die Verbrennungsluft (Wind) wird von einem Gebläse verdichtet und über Düsen in den Ofenschacht eingeblasen. Man unterscheidet den Kaltwind- und den Heißwindbetrieb, je nachdem, ob die zugeführte Verbrennungsluft kalt oder vorgewärmt ist. Der Schmelzprozeß läuft wie folgt ab: Die durch die Begichtungsöffnung eingeworfenen Chargen füllen den Ofenschacht etwa bis in Höhe der Gichtbühne. Die aufsteigenden heißen Ofengase erwärmen den Einsatz, der durch das Schmelzen allmählich in den Ofenschacht abgleitet. Nach Erreichen der Schmelzzone (300 bis 400 mm über den Düsen) wird das Eisen flüssig und tropft durch das Koksbett, d.i. die Füllkokssäule von der Sohle bis zur Schmelzzone, auf der die Charge ruht. Hierbei kohlt sich das Eisen stark auf. Neue Entwicklungen sind der "futterlose Kupolofen", bei dem der Schacht aus einem wasserberieselten Metallkörper ohne Feuerfestzustellung besteht, und der "kokslose Kupolofen", der wahlweise mit Gas oder Öl betrieben wird. Der Ofen weist anstelle des tragenden Koksgerüstes einen wassergekühlten Rost mit einem darüberliegenden Aufbau aus feuerfesten Kugeln auf. Darüber hinaus sind Kaltwindkupolöfen mit Sekundärwindbetrieb bekannt, bei denen durch Einblasen von Luft in den Ofenschacht brennbare Gasbestandteile teilweise nachverbrannt werden. Hierbei kann eine teilweise Rückreaktion des gebildeten Kohlendioxid mit dem Koks zu Kohlenmonoxid (Boudouard-Reaktion) nicht verhindert werden.

Zum Einschmelzen von Schrott ist auch schon vorgeschlagen, einen Herdofen mit wassergekühlten Wandelementen als Frischgefäß zu verwenden. Bei diesem als EOF-Verfahren bezeichneten Verfahren wird im Herdofen durch seitlich unterhalb der Badoberfläche angeordnete Düsen Sauerstoff und durch seitlich oberhalb der Badoberfläche angeordnete Brenner Öl und/oder Feinkohle gemeinsam mit Sauerstoff eingeblasen. Durch über den Öl/Feinkohle-Sauerstoff-brennern angeordnete Blasformen wird angereicherter Heißwind zugeführt und das Abgas im Ofengefäß vollständig nachverbrannt. Die heißen Ofenabgase werden durch eine über dem Ofen befindliche Schrottvorwärmanlage geleitet und anschließend einem Rekuperator zur Windvorwärmung zugeführt. Der Schrott wird auf maximal 800°C vorgewärmt und dem Herdofen diskontinuierlich zugegeben.

Nachteile dieses Verfahrens sind der komplizierte mechanische Aufbau des Hochtemperatur-Schrottvorwärmers und die diskontinuierliche Chargierweise. Die hierdurch verursachten zeitlich schwankenden Abgastemperaturen erschweren die weitere Ausnutzung der Abgaswärme.

Um die Einschmelzleistung von Stahlwerkskonvertern zu erhöhen, wurden in letzter Zeit auch Verfahren entwickelt, bei denen durch spezielle Düsen im Konverterboden Feinkohle und Sauerstoff in das Metallbad eingeblasen werden. Die bei der Teilverbrennung des Kohlenstoffs zu Kohlenmonoxid freiwerdende Wärme wird zum Einschmelzen von Schrott oder Eisenschwamm verwendet. Beispiele für solche Verfahren sind der sog. COIN-Prozeß und das KMS-Verfahren. Beim KMS-Verfahren wird zusätzlich Sauerstoff auf die Badoberfläche aufgeblasen und das Abgas teilweise nachverbrannt.

Ein wesentlicher Nachteil dieser Verfahren ist die schlechte Gasausnutzung. Für den wirtschaftlichen Betrieb solcher Anlagen ist eine sekundäre Nutzung des Abgases unbedingt erforderlich.

Aus der FR-A 2 406 792 ist ferner ein Schmelzofen für Eisenprodukte vorbekannt, der einen Schacht und einen zu diesem asymmetrisch geformten durch Brenner beheizten und vom Schacht zum Abstich hin abfallenden Herd aufweist, wobei im Übergangsbereich zwischen dem Schacht und dem Herd eine Einschnürung ausgebildet ist, in der sich ein die Schüttsäule im Schacht stützendes Material-Gewölbe bildet, das durch sauerstoffhaltige Gase kontrolliert wird, die durch in diesem Bereich im Schacht angeordnete Düsen zugeführt werden. Nachteilig ist beim Betrieb dieses Ofens, daß das Gewölbe die Übertragung der durch die Brenner erzeugten Gase an die Schüttsäule behindert, ferner daß zum Schmelzen und Überhitzen ausschließlich auf die Schmelze gerichtete erdgasbeheizte Brenner eingesetzt werden, was eine unzureichende Wärmeausnutzung mit sich bringt.

Der Erfindung liegt die Aufgabe zugrunde, ein Verfahren zu schaffen, das die Mängel der bisherigen Verfahren nicht aufweist, bei dem staubförmige Kohlenstoffträger zum Einschmelzen verwendet und die latente und spezifische Wärme des entstehenden Abgases durch eine Nachverbrennung ausgenutzt werden kann. Diese Aufabe wird mit einem Verfahren gelöst, das die Merkmale aufweist, die im Anspruch 1 angegeben sind. Bei diesem Verfahren wird im vorzugsweise zur Ofenachse asymmetrisch ge-

formten Herd eines Schachtofens Feinkohle und Sauerstoff durch eine oder mehrere Düsen unter das Metallbad geblasen. Zusätzlich sind oberhalb der Badoberfläche eine oder mehrere Feinkohle/Sauerstoffdüsen angebracht. Die bei der Teilverbrennung des Kohlenstoffs innerhalb der Schmelze und im Gasraum freiwerdende Wärme wird zum kontinuierlichen Einschmelzen von Schrott verwendet. Der Feinkohle- und Sauerstoffanteil jeder Düse wird dabei so bemessen, daß durch die oberhalb der Badoberfläche befindlichen Düsen weitgehend die Schmelzwärme des Schrotts und durch die unterhalb der Badoberfläche angeordneten Düsen die Überhitzungswärme eingebracht wird. Durch eine Variation des Feinkohle/Sauerstoff-Verhältnisses in den Unterbaddüsen kann in der Schmelze ein beliebiger Kohlenstoffgehalt eingestellt werden. Das Verfahren wird so betrieben, daß die aufsteigenden Gase den durch den Ofenschacht in den Herdraum absinkenden Schrott vorwärmen. Über den oberhalb des Bades angeordneten Feinkohle-Sauerstoff-Düsen werden vorzugsweise zwei oder mehr Ringdüsen angebracht, durch die Luft und/oder Sauerstoff in den Gasstrom eingeblasen wird. Dadurch werden die brennbaren Gasbestandteile nahezu vollständig nachverbrannt und so die latente Wärme des Abgasses fast vollständig ausgenutzt.

Das nachverbrannte, abgekühlte Gas wird zweckmäßigerweise in einer Ringleitung gesammelt und entsorgt. Die enthaltene Restwärme kann für Vorwärmung der Luft oder des Sauerstoffs für die Nachverbrennungsstellen genutzt werden.

Der Herdofen hat einen zur Ofenachse asymmetrischen Querschnitt. Dort, wo die unter dem Metallbad angeordnete Feinkohle-Sauerstoff-Düse in den Herdraum eintritt, wölbt sich die Ofenwand deutlich vor. Dadurch wird verhindert, daß die Düse von herabfallenden Schrotteilen beschädigt wird. Die Schrottsäule ruht dabei direkt auf dem Herdboden.

Die erfindungsgemäße Vorrichtung hat die Merkmale des Anspruchs 9. Hierbei ist der Herdofen mit einem geneigten Boden ausgestattet. Die tiefste Stelle des Bodens befindet sich dabei auf der Ebene der Feinkohle-Sauerstoff-Düsen. Zweckmäßig steigt der Boden zu der gegenüberliegenden Seite hin an. Die Steigung beträgt 5 bis 45°. Durch diese Anordnung wird gewährleistet, daß sich das flüssige Metall stets vor der Feinkohle-Sauerstoff-Düse sammelt und so die Düse ständig von der Schmelze umspült wird. Dadurch wird übermäßiger Düsenverschleiß verhindert. Außerdem ist die Badtemperatur in diesem Bereich durch die direkte Wärmeeinbringung stets so hoch, daß ein störungsfreier Abstich durch den in unmittelbarer Nähe befindlichen Syphon möglich ist.

Die Syphonebene kann um 45° zur Düsenebene versetzt sein. Diese Anordnung hat den Vorteil, daß der Bereich des Metall- und Schlackenauslaufes durch eine direkt auftreffende Flamme nicht beschädigt werden kann, gleichzeitig aber die Abstichtemperatur des Metalls für einen störungsfreien Betrieb ausreichend hoch ist.

Im Bereich des Metallbades wird der Herdofen mit Magnesit- oder Chrom-Magnesit-Steinen ausgemauert. In der Schlackenzone besteht die Ofenwand vorzugsweise aus Material mit dahinter liegenden wassergekühlten Elementen, so daß eine Ansatzbildung zum Schutz der Zustellung provoziert wird.

Der Nachverbrennungsraum wird vorzugsweise durch wassergekühlte Wände gebildet.

Gegenüber dem Stand der Technik bietet das der Erfindung zugrundeliegende Verfahren den Vorteil, daß 100 % Schrotteinsatz möglich ist. Außerdem ist die Einstellung beliebiger C-Gehalte im Bad möglich. Auch lassen sich konstante Abgastemperaturen einhalten. Schließlich befinden sich in Hochtemperaturzonen keine mechanischen Bauteile, und es ist kontinuierliche Schrottchargierung und kontinuerlicher Metall-/Schlackeabzug möglich. Eine Überschußgasverwertung ist nicht erforderlich.

In besonderen Fällen können die oberhalb der Badoberfläche vorgesehenen Düsen zum Einblasen von Kohlenstoffträger und Sauerstoff auch durch Plasmabrenner ersetzt werden. Dies hat den besonderen Vorteil, daß oberhalb der Badoberfläche eine inerte Atmosphäre entsteht, die sich auf die Qualität der erzeugten Schmelze vorteilhaft auswirkt. Die Plasmabrenner werden vorteilhaft mit Wechsel- oder Drehstrom betrieben.

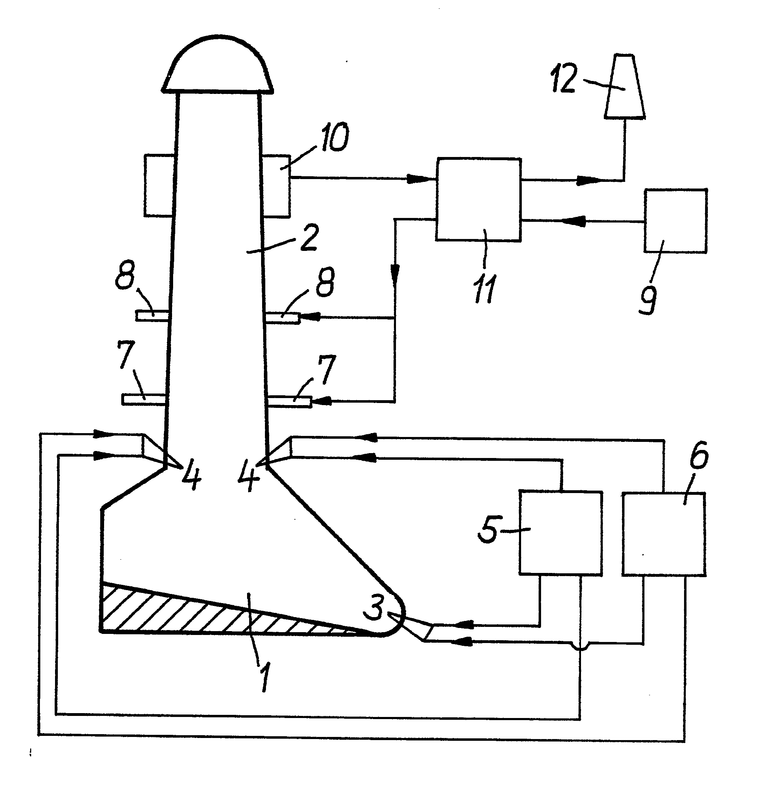

Ein Ausführungsbeispiel einer Vorrichtung zur Durchführung des Verfahrens nach der Erfindung ist in der Zeichnung dargestellt und wird im folgenden näher beschrieben:

An einen vertikalen Schacht 2 eines futterlosen Kalt-/Heißwindkupolofens, der kokslos und ohne Rost betrieben wird, schließt ein asymetrischer Herd 1 mit einem Fassungsvermögen von ca. 10 t Metall an. Der Herd 1 hat einen Bodendurchmesser von 2000 mm. Bezogen auf die Mittelachse des Schachtes beträgt der Abstand zwischen Ofenwand und Ofenmitte auf einer Seite des Herdes 1 ca. 750 mm und auf der anderen Seite etwa 1250 mm. Am Übergang zum zylindrischen Schacht hat der Ofen einen Durchmesser von 1000 mm. Der Schmelzofen ist 2000 mm hoch. Der Ofenboden ist um ca. 45° geneigt, wobei das Gefälle so angeordnet ist, daß die tiefste Stelle des Bodens mit der am weitesten von der Mittelachse des Schachtes entfernten Stelle der Ofenwand zusammenfällt. Der Ofen hat einen Stahlmantel, der im Bereich der Schlackenzone und oberhalb der Schlackenebene wassergekühlt ist. Boden und Ofenwände wurden mit Magnesit- oder Chrom-Magnesit-Steinen zugestellt. Die Ausmauerung endet oberhalb der Schlackenebene.

An der tiefsten Stelle des Ofenbodens befindet sich eine Feinkohle-Sauerstoff-Düse 3. Zwei Feinkohlen-Sauerstoff-Düsen 4 sind oberh-lb der Schlackenebene an der Übergangsstelle vom Herd 1 zum Schacht 2 des Kupolofens angeordnet. Alle Düsen werden aus einem Kohlebunker 5 und einem Sauerstofftank 6 über Rohrleitungen mit Feinkohle und Sauerstoff beaufschlagt.

Schlacke und Metall werden kontinuierlich über einen Schlacken- und Metallsyphon abgezogen. Die

3

Syphonebene ist um 45° zu den unter dem Bad befindlichen Feinkohle-Sauerstoff-Düsen versetzt im ausgewölbten Teil des Herdes angeordnet.

Der Durchmesser des Kupolofenschachtes beträgt 1000 mm, die nutzbare Höhe bis zur Ringleitung ca. 3900 mm. In diesem Bereich sind im Abstand von 1000 mm zwei Ringdüsen 7 und 8 angeordnet, die über Rohrleitungen aus einem Vorratsbehälter 9 mit Luft oder aus dem Sauerstofftank 6 mit Sauerstoff versorgt werden. In der Ringleitung 10 werden die Abgase des Kupolofens gesammelt, einem Wärmetauscher 11 zugeführt und anschließend über einen Kamin 12 entsorgt. Die Restwärme des Wärmetauschers kann zur Vorwärmung der Nachverbrennungsluft bzw. des Sauerstoffes genutzt werden.

Mit der oben beschriebenen Anordnung soll Stahlschrott mit einer Zusammensetzung von z.B. 0,3 % C, 0,2 % Si, 0,4 % Mn; 0,03 % P; 0,04 % S eingeschmolzen werden. Bei Verwendung einer mittelflüchtigen Kohle mit 10 % Asche, 9 % Flüchtigen und 80 % $C_{fix}$ ergeben sich in Abhängigkeit von den Abgasverhältnissen folgende Verbrauchs- und Leistungszahlen:

| | |
|---|---|
| CO-Gehalt im Abgas/Vol % | 5 |
| Temperatur des Abgases/°C | 300 |
| Kohle kg/h | 720 |
| Sauerstoff $Nm^3$/h | 538 |
| Sekundärwind $Nm^3$ Luft/h (ohne Anreicherung) | 2583 |
| Schmelzleistung t/h | 9,8 |
| Abgasmenge $m^3$/h | 3457 |

**Patentansprüche**

1. Verfahren zum kontinuierlichen Einschmelzen von Schrott und/oder Eisenschwamm in einem Schmelzofen mit einem an einen vertikalen Schacht (2) unten anschließenden Herd (1), der asymmetrisch zur vertikalen Achse des Schachtes (2) geformt ist, wobei im von der Achse am weitesten entfernten Teil des Herdes (1) sowie näher zu der Achse über dem Bad jeweils mindestens eine Düse (3, 4) und am Schacht (2) mindestens eine weitere Düse (7, 8) angeordnet ist, bei dem durch die Düse(n) (3, 4) des Herdes (1) zugeführter Brennstoff teilweise mit Sauerstoff verbrannt und das bei der Teilverbrennung entstehende Gas mit durch die Düse(n) (7, 8) des Schachtes (2) zugeführtem Sauerstoff zur Schrottvorwärmung nachverbrannt wird, dadurch gekennzeichnet, daß durch die im von der Achse am weitesten entfernten Teil des Herdes angeordnete(n) Düse(n) (3) auf das im Herd gebildete Schmelzbad von unter dessen Oberfläche her ein fester Kohlenstoffträger und Sauerstoff und durch die anderen Düsen (4) des Herdes (1) – wofür zwei oder mehr Düsen (4) verwendet werden – ein fester Kohlenstoffträger und Sauerstoff über das Bad geblasen werden, wobei die Aufteilung der gesamten einzublasenden Kohlenstoffträger- und Sauerstoffmenge auf die einzelnen Düsen (3, 4) in der Weise erfolgt, daß unterhalb der Badoberfläche die gewünschte Überhitzungswärme und oberhalb der Badoberfläche im wesentlichen die Schmelzwärme des Schrotts eingebracht wird.

2. Verfahren nach Anspruch 1, dadurch gekennzeichnet, daß als Kohlenstoffträger Kohle mit einer Korngröße von < 5 mm eingesetzt wird.

3. Verfahren nach Anspruch 2, dadurch gekennzeichnet, daß die Kohle eine Korngröße < 1 mm hat.

4. Verfahren nach Anspruch 2 oder 3, dadurch gekennzeichnet, daß die feinkörnige Kohle vorgeschwelt ist.

5. Verfahren nach einem der vorhergehenden Ansprüche, dadurch gekennzeichnet, daß zur Nachverbrennung des Gases Luft eingesetzt wird.

6. Verfahren nach Anspruch 5, dadurch gekennzeichnet, daß die Luft mit Sauerstoff angereichert ist.

7. Verfahren nach einem der vorhergehenden Ansprüche, dadurch gekennzeichnet, daß die Restwärme aus dem Abgas des Ofenschachts (2) zur Vorwärmung der Nachverbrennungsluft genutzt wird.

8. Verfahren nach einem der vorhergehenden Ansprüche, dadurch gekennzeichnet, daß durch Einstellung des geeigneten Feinkohle/Sauerstoff-Verhältnisses in den Unterbaddüsen eine Schmelze mit beliebigem C-Gehalt hergestellt wird.

9. Vorrichtung zur Durchführung des Verfahrens nach einem der vorhergehenden Ansprüche unter Einsatz eines Schmelzofens mit einem zur Ofenachse eines Schachtes (2) asymmetrisch geformten Herd (1), in dessen von der Ofenachse am weitesten entfernten Teil sowie näher zur Ofenachse oberhalb der Badoberfläche jeweils mindestens eine Düse (3, 4) zur gleichzeitigen Zufuhr eines Kohlenstoffträgers und von Sauerstoff angebracht ist, dadurch gekennzeichnet, daß der in einem Winkel von 5 bis 45° zur Horizontalen geneigte Boden des einen Syphonauslauf aufweisenden Herdes (1) an seiner tiefsten Stelle die von der Ofenachse am weitesten entfernten Düsen (3) aufweist, die unterhalb der Badoberfläche angebracht sind, und daß oberhalb der Badoberfläche zwei oder mehr Düsen (4) angeordnet sind.

10. Vorrichtung nach Anspruch 9, dadurch gekennzeichnet, daß die Ebene des Syphonauslaufes im Herd (1) um 10 bis 90°, zu den unterhalb der Badoberfläche angebrachten Düsen (3) versetzt ist.

11. Vorrichtung nach Anspruch 10, dadurch gekennzeichnet, daß die Ebene des Syphonauslaufes im Herd (1) um 45° zu den unterhalb der Badoberfläche befindlichen Düsen (3) versetzt ist.

12. Vorrichtung nach einem der Ansprüche 9 bis 11, dadurch gekennzeichnet, daß die oberhalb des Bades angeordneten Düsen (4) durch Plasmabrenner ersetzt sind.

13 . Vorrichtung nach einem der Ansprüche 9 bis 12, dadurch gekennzeichnet, daß im Schacht (2) mindestens eine Nachverbrennungsstelle (Düsen 7, 8) eingerichtet ist.

**Claims**

1. A process for the continuous melting-down of scrap and/or sponge iron in a melting furnace with a hearth (1) adjoining the bottom of a vertical shaft (2), which hearth is formed asymmetrically to the vertical axis of the shaft (2), with at least one jet (3, 4) in each case being disposed in the part of the hearth (1) furthest away from the axis and also closer to the axis above the bath and at least one additional jet (7, 8) being disposed on the shaft (2), in which process fuel supplied through the jet(s) (3, 4) of the hearth (1) is partially burnt with oxygen and the gas produced upon the partial combustion with oxygen supplied through the jet(s) (7, 8) of the shaft (2) is subsequently burnt to preheat the scrap, characterised in that a solid carbon carrier and oxygen are injected through the jet(s) (3) disposed in the part of the hearth furthest from the axis onto the molten bath formed in the hearth from below the surface thereof and a solid carbon carrier and oxygen are injected across the bath through the other jets (4) of the hearth (1) – for which two or more jets (4) are used – with the entire quantities of carbon carrier and oxygen to be injected being distributed to the individual jets (3, 4) in such a manner that the desired superheat is introduced beneath the bath surface and essentially the melting heat of the scrap is introduced above the bath surface.

2. A process according to claim 1, characterised in that coal having a grain size of < 5 mm is used as carbon carrier.

3. A process according to claim 2, characterised in that the coal has a grain size of < 1 mm.

4. A process according to claim 2 or 3, characterised in that the fine-grained coal is precarbonised at low temperature.

5. A process according to one of the preceding claims, characterised in that air is used for the after-burning of the gas.

6. A process according to claim 5, characterised in that the air is enriched with oxygen.

7. A process according to one of the preceding claims, characterised in that the residual heat from the waste gas from the furnace shaft (2) is used to preheat the after-burning air.

8. A process according to one of the preceding claims, characterised in that a molten metal having any desired C content is produced by setting the suitable fine coal/oxygen ratio in the under-bath jets.

9. An apparatus for carrying out the process according to one of the preceding claims using a melting furnace with a hearth (1) formed asymmetrically to the furnace axis of a shaft (2), in the part of which hearth which is furthest from the furnace axis and also closer to the furnace axis above the bath surface there is in each case at least one jet (3, 4) for the simultaneous supply of a carbon carrier and of oxygen, characterised in that the base, inclined at an angle of 5 to 45° to the horizontal, of the hearth (1) having a siphon outlet has at its deepest point the jets (3) furthest from the furnace axis, which are located beneath the bath surface, and that two or more jets (4) are disposed above the bath surface.

10. An apparatus according to claim 9, characterised in that the plane of the siphon outlet in the hearth (1) is offset by 10 to 90° to the jets (3) located beneath the bath surface.

11. An apparatus according to claim 10, characterised in that the plane of the siphon outlet in the hearth (1) is offset by 45° to the jets (3) located beneath the bath surface.

12. An apparatus according to one of claims 9 to 11, characterised in that the jets (4) located above the bath are replaced by plasma burners.

13. An apparatus according to one of claims 9 to 12, characterised in that at least one after-burning point (jets 7, 8) is arranged in the shaft (2).

**Revendications**

1. Procédé pour la refusion continue de ferrailles et/ou d'éponges de fer dans un four de fusion ayant une sole (1) se raccordant à la base d'une cuve verticale (2), sole qui est asymétrique par rapport à l'axe vertical de la cuve (2), dans la partie la plus éloignée de l'axe de la sole (1), ainsi que plus près de l'axe au-dessus du bain, étant agencée, à chaque fois, au moins une buse (3, 4) et, sur la cuve (2), au moins une autre buse (7, 8), dans lequel du combustible amené par la ou les buses (3, 4) de la sole (1) est brûlé partiellement avec de l'oxygène et le gaz créé par le brûlage partiel est rebrûlé avec l'oxygène amené par la ou les buses (7, 8) de la cuve (2) pour le préchauffage des ferrailles, caractérisé en ce que, par la ou les buses (3) agencées dans la partie la plus éloignée de l'axe de la sole, sont soufflés un substrat de carbone solide et de l'oxygène dans le bain de fusion formé dans la sole de dessous sa surface, et par les autres buses (4) de la sole (1) – deux ou plus buses (4) pouvant être utilisées pour cela – sont soufflés un substrat de carbone solide et de l'oxygène au-dessus du bain, la répartition de la quantité totale du substrat de carbone solide et d'oxygène à souffler entre les buses individuelles (3, 4) ayant lieu de sorte que, au-dessous de la surface du bain, est apportée la chaleur de surchauffe, et, au-dessus de la surface du bain, généralement la chaleur de fusion des ferrailles.

2. Procédé selon la revendication 1, caractérisé en ce que, en tant que substrat de carbone, on utilise du charbon d'une taille de grains inférieure à 5 mm.

3. Procédé selon la revendication 2, caractérisé en ce que le charbon présente une taille de grains inférieure à 1 mm.

4. Procédé selon la revendication 2 ou 3, caractérisé en ce que le charbon à grains fins est carbonisé lentement au préalable.

5. Procédé selon une des revendications précédentes, caractérisé en ce que, pour le brûlage ultérieur du gaz, on utilise de l'air.

6. Procédé selon la revendication 5, caractérisé en ce que l'air est enrichi en oxygène.

7. Procédé selon une des revendications précédentes, caractérisé en ce que la chaleur résiduelle du gaz d'échappement de la cuve du four (2) est utilisée pour le préchauffage de l'air pour le brûlage ultérieur.

8. Procédé selon une des revendications précédentes, caractérisé en ce que, par réglage de la proportion appropriée fines/oxygène dans les buses sous le bain, on obtient une masse fondue de teneur en carbone quelconque.

9. Dispositif pour la mise en oeuvre du procédé selon une des revendications précédentes, en utilisant un four de fusion ayant une sole (1), agencée de façon asymétrique par rapport à l'axe d'une cuve (2), dans la partie la plus éloignée de l'axe du four de laquelle, ainsi que plus près de l'axe du four au-dessus de la surface du bain, est prévue, à chaque fois, au moins une buse (3, 4) pour l'amenée simultanée d'un substrat de carbone et d'oxygène, caractérisé en ce que le fond, incliné sous un angle de 5 à 45° par rapport à l'horizontale, de la sole (1) présentant une sortie de syphon, comporte, à sa position la plus profonde, les buses (3) les plus éloignées de l'axe du four, qui sont agencées au-dessous de la surface du bain, et en ce que, au-dessus de la surface du bain, sont agencées deux ou plus buses (4).

10. Dispositif selon la revendication 9, caractérisé en ce que le plan de la sortie de syphon dans la sole (1) est décalé de 10 à 90° par rapport aux buses (3) agencées sous la surface du bain.

11. Dispositif selon la revendication 10, caractérisé en ce que le plan de la sortie de syphon dans la sole (1) est décalé de 45° par rapport aux buses (3) se trouvant sous la surface du bain.

12. Dispositif selon une des revendications 9 à 11, caractérisé en ce que les buses ( 4), agencées au-dessus du bain, sont remplacées par des torches à plasma.

13. Dispositif selon une des revendications 9 à 12, caractérisé en ce que, dans la cuve (2), est prévue au moins une position de rebrûlage (buses 7, 8).